# EUROPEAN PATENT APPLICATION

(11) **EP 0 557 905 A1**
(43) Date of publication of application: **01.09.1993**
(21) Application number: 93102670.2
(22) Date of filing: 19.02.1993
(51) Int. Cl.: F16D 69/02

(54) **Friction material composition and process for production thereof**

(30) Priority: 28.02.1992 JP 78326/92
(71) Applicant: NISSHINBO INDUSTRIES, INC., Chuo-ku Tokyo 103 (JP)
(72) Inventor: Muto, Tamotsu, c/o Nisshinbo Industries, Inc., Adachi-ku, Tokyo 123 (JP)
(74) Representative: Laufhütte, Dieter, Dr.-Ing.

(57) **Abstract**

The present invention provides a friction material composition which, when used in an ultrasonic motor, is superior in abrasion resistance and yet gives rise to no sharp reduction in number of rotations in continuous operation of the motor, and a process for producing said friction material composition.

The present friction material composition comprises at least a polyacrylonitrile-based carbon fiber, a fiber component other than said polyacrylonitrile-based carbon fiber, and a thermosetting resin; and the present process for producing a friction material composition comprises dispersing, in a dispersing medium, at least a polyacrylonitrile-based carbon fiber, a fiber component other than said polyacrylonitrile-based carbon fiber, and a thermosetting resin, filtering the dispersion through a filter material, and subjecting the sheet-shaped material remaining on the filter material to molding under heating and pressure.

## Description

### Field of the Invention

The present invention relates to a friction material composition which is suitably mounted on the contact friction surface of an ultrasonic motor, as well as to a process for producing said friction material composition.

### Background of the Invention

Ultrasonic motors are constituted and operated as follows. A piezoelectric ceramic is attached to an elastic vibrator; an ultrasonic voltage is applied to the piezoelectric ceramic to excite the elastic vibrator to allow the vibrator to give rise to ultrasonic vibration; and the ultrasonic vibration is transmitted by a contact-friction force, to a movement pressure-contacted with the elastic vibrator, to obtain a driving force.

Therefore, the state of the contact friction between the elastic vibrator and the movement is an important factor in determining the properties of ultrasonic motor, such as output torque, number of rotations, input/output efficiency, life and the like.

It was proposed in Japanese Patent Application Kokai(Laid-Open) No. 23585/1987 that an ultrasonic motor having a stable state of contact friction can be obtained by mounting a friction material composition on the contact-friction surface of the elastic vibrator or movement. Such a friction material composition must have properties such as:
1. small in the abrasion caused by contact friction (large abrasion resistance),
2. the frictional coefficient µ is stable and large,
3. low in property deterioration and stable over a long period of time, and
4. no friction sound is generated.

In order to improve the abrasion resistance of a friction material composition, addition of a carbon fiber to the friction material composition was proposed in, for example, Japanese Patent Application Kokai (Laid-Open) Nos. 147978/1987 and 255483/1989. When such a conventional friction material composition containing a carbon fiber is used in an ultrasonic motor and the resulting ultrasonic motor is subjected to continuous operation, however, there occurs a phenomenon in which the number of rotations of the ultrasonic motor is significantly reduced for few to several minutes at the particular timings determined by the kind of the carbon fiber.

The objects of the present invention are to provide a friction material composition which is free from the above problems of the prior art and, when used in an ultrasonic motor, is superior in abrasion resistance and gives no sharp reduction in number of rotations in continuous operation of the motor, and a process for producing such a friction material composition.

In order to develop the above friction material composition, the present inventor made an extensive study on various compositions. As a result, the present inventor found that a composition comprising a polyacrylonitrile-based carbon fiber as a component gives good results. This finding has led to the completion of the present invention.

### Summary of the Invention

According to the present invention, there is provided a friction material composition which comprises at least a polyacrylonitrile-based carbon fiber, a fiber component other than said polyacrylonitrile-based carbon fiber, and a thermosetting resin.

The present invention further provides a process for producing a friction material composition, which comprises dispersing, in a dispersing medium, at least a polyacrylonitrile-based carbon fiber, a fiber component other than said polyacrylonitrile-based carbon fiber, and a thermosetting resin, filtering the dispersion through a filter material, and subjecting the sheet-shaped material remaining on the filter material to molding under heating and pressure.

### Brief Description of the Drawings

Fig. 1 is a graph showing the change of number of rotations with time when the friction material composition of Example 1 was used in an ultrasonic motor and the motor was subjected to a continuous operation of 300 hours.

Fig. 2 is a graph showing the change of number of rotations with time when the friction material composition of Comparative Example 1 was used in an ultrasonic motor and the motor was subjected to a continuous operation of 300 hours.

Fig. 3 is a graph showing the change of number of rotations with time when the friction material composition of Comparative Example 2 was used in an ultrasonic motor and the motor was subjected to a continuous operation of 300 hours.

### Detailed Description of the Invention

The present invention is hereinafter described in detail.

Since the present friction material composition is characterized by comprising a polyacrylonitrile-based carbon fiber, the polyacrylonitrile-based carbon fiber is explained. The polyacrylonitrile-based carbon fiber is produced by first producing a polyacrylonitrile fiber by a known method and then subjecting the fiber to a treatment for flame resistance and subsequent carbonization.

The polyacrylonitrile-based carbon fiber preferably has a fiber length of 1 mm or more. A fiber length up to few to several tens of meters can be used. The carbon fiber has no restriction for the diameter.

The present friction material composition further comprises a fiber component other than the polyacrylonitrile-based carbon fiber. As this fiber component, there is mentioned at least one fiber selected from known fibers such as aromatic polyamide fiber, phenolic fiber, polyacrylonitrile fiber, rock wool fiber and the like. Of these fibers, an aromatic polyamide fiber is particularly preferable in view of the preventability for the disintegration during handling.

The present friction material composition furthermore comprises a thermosetting resin. As the thermosetting resin, there is mentioned at least one resin selected from known thermosetting resins such as polyimide resin, phenolic resin, rubber-modified phenolic resin, epoxy resin, urea resin, polyurethane resin and the like. The thermosetting resin has no particular restriction, but particularly preferable are a polyimide resin, a phenolic resin and a rubber-modified phenolic resin.

In the present friction material composition, there can be used, as necessary, a friction coefficient modifier such as carbon black, graphite, fluorinated graphite, sulfurized molybdenum, melamine powder, cashew dust or the like.

The proportions of the polyacrylonitrile-based carbon fiber, the fiber component other than the polyacrylonitrile-based carbon fiber, and the thermosetting resin in the present friction material composition are, for example, 5-60% by volume, preferably 10-40% by volume, 2-75% by volume, preferably 3-20% by volume, and 20-80% by volume, preferably 30-50% by volume, respectively.

When the proportion of the polyacrylonitrile-based carbon fiber is less than 5% by volume, there can be obtained no effect brought about by the use of the polyacrylonitrile-based carbon fiber. When the proportion is more than 60% by volume, the resulting friction material composition has voids in which the resin is not present sufficiently. When the proportion of the fiber component other than the polyacrylonitrile-based carbon fiber is less than 2% by volume, the sheet-shaped material obtained by filtering may be disintegrated during the handling. Meanwhile, the maximum proportion of said fiber component is 75% by volume in view of the required proportions of the other components. When the proportion of the thermosetting resin is less than 20% by volume, the resulting friction material composition has voids in which the resin is not present sufficiently. When the proportion of the resin is more than 80% by volume, the resin leaks through the interface between male die and female die, making it difficult to obtain the required composition.

The present friction material composition having the above-mentioned constitution can be produced by the present process described below.

First, the raw materials are weighed so as to give the above-mentioned component proportions. Then, they are dispersed in an appropriate dispersing medium. In this case, there is no restriction as to the stirrer. Thereafter, the dispersion is filtered through a filter material to obtain a sheet-shaped material. As the filter material, there can be used an appropriate material such as filter cloth, filter paper or the like, but there is preferred a filter material of low filtering loss, capable of collecting thereon the raw materials in the dispersion, in a high recovery ratio. It is possible to adopt reduced-pressure filtration in order to shorten the filtering time.

The dispersing medium is required to be a liquid at room temperature and not to dissolve the components of the present friction material composition. For example, water is used as the dispersing medium.

The sheet-shaped material obtained by filtration is then dried. Since in this step it is sufficient if water is removed, drying, for example, at 60°C for about one night is sufficient. The dried sheet-shaped material is subjected to molding under heating and pressure, whereby a friction material composition according to the present invention can be obtained. The conditions of heating and pressure are, for example, 200-220°C, 10-30 minutes and 200 kgf/cm² when the thermosetting resin is a polyimide resin, and 150-170°C, 10-30 minutes and 200 kgf/cm² when the thermosetting resin is a phenolic resin.

The present invention is hereinafter described in more detail referring to Examples.

### Example 1

In water was dispersed a composition comprising 20% by volume of a polyacrylonitrile-based carbon fiber [TORAYCA CHOPPED FIBER T010 (trade name), a product of TORAY INDUSTRIES, INC., fiber length = 6 mm], 20% by volume of an aromatic polyamide fiber pulp [KEVLAR (trade name), a product of TORAY-DuPont] and 60% by volume of a polyimide [TECHMIGHT (trade name), a product of Mitsui Petrochemical Industries,Ltd.]. The resulting dispersion was filtered to obtain a sheet-shaped material. The sheet-shaped material was dried at 60°C for one night. The dried material was treated at 200 kgf/cm² at 220°C for 10 minutes to produce a friction material composition of the present invention.

### Comparative Example 1

A composition was subjected to the same treatment as in Example 1 except that the polyacrylonitrile-based carbon fiber used in the composition of Example 1 was replaced by a pitch-based carbon fiber [KURECA CHOP C103S (trade name), a product of Kureha Chemical Industry Co., Ltd., fiber length = 3 mm], to obtain a friction material composition for comparison.

### Comparative Example 2

A composition was subjected to the same treatment as in Example 1 except that the polyacrylonitrile-based carbon fiber used in the composition of Example 1 was replaced by a phenol-based carbon fiber [KYNOL (trade name), a product of Gun-ei Kagaku, fiber length = 6 mm], to obtain a friction material composition for comparison.

Each of the above-obtained friction material compositions was used in an ultrasonic motor [USM-40D, a product of Matsushita Electric Industrial Co., Ltd.] and tested.

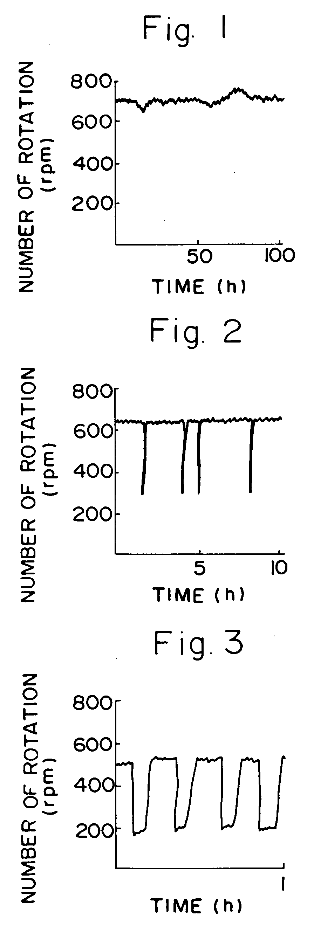

That is, the motor was subjected to 20-hour aging (load-free operation) and then to 300-hour continuous operation under a load of 200 gf·cm. The changes of number of rotations with time are shown in Figs. 1 to 3.

As is clear from Fig. 1, when the friction material composition of Example 1 was used, the number of rotations showed no sharp reduction for 100 hours and was stable.

In contrast, when the friction material compositions of Comparative Examples 1 and 2 were used, as is clear from Figs. 2 and 3, the number of rotations showed sharp reduction several times each for several minutes in the time period of 10 hours in the case of the friction material composition of Comparative Example 1, and there was frequent alternation of fast rotation and slow rotation even in the time period of one hour in the case of the friction material composition of Comparative Example 2.

The friction material composition of the present invention comprises at least a polyacrylonitrile-based carbon fiber, a fiber component other than said polyacrylonitrile-based carbon fiber, and a thermosetting resin, and has excellent abrasion resistance and yet gives rise to no sharp reduction in number of rotations during continuous operation.

The reasons for these effects are considered to be that while a pitch-based carbon fiber or the like, when worn, generates a hard powder and invites reduction in number of rotations by acting like rollers, the polyacrylonitrile-based carbon fiber, when worn, generates a very fine or soft powder and invites no reduction in number of rotations.

## Claims

1. A friction material composition which comprises at least a polyacrylonitrile-based carbon fiber, a fiber component other than said polyacrylonitrile-based carbon fiber, and a thermosetting resin.

2. A friction material composition according to Claim 1, wherein the polyacrylonitrile-based carbon fiber has a fiber length of 1 mm or more.

3. A friction material composition according to Claim 1, wherein the fiber component other than the polyacrylonitrile-based carbon fiber is an aromatic polyamide fiber, a phenolic fiber, a polyacrylonitrile fiber or a rock wool fiber.

4. A friction material composition according to Claim 1, wherein the thermosetting resin is a polyimide resin, a phenolic resin, a rubber-modified phenolic resin, an epoxy resin, a urea resin or a polyurethane resin.

5. A friction material composition according to Claim 1, wherein the contents of the polyacrylonitrile-based carbon fiber, the fiber component other than the polyacrylonitrile-based carbon fiber and the thermosetting resin are 5-60% by volume, 2-75% by volume and 20-80% by volume, respectively.

6. A process for producing a friction material composition, which comprises dispersing, in a dispersing medium, at least a polyacrylonitrile-based carbon fiber, a fiber component other than said polyacrylonitrile-based carbon fiber, and a thermosetting resin, filtering the dispersion through a filter material, and subjecting the sheet-shaped material remaining on the filter material to molding under heating and pressure.

7. A process for producing a friction material composition according to Claim 6, wherein the dispersing medium is water.
